# EUROPÄISCHE PATENTSCHRIFT

(11) **EP 2 293 175 B1**
(45) Veröffentlichungstag und Bekanntmachung des Hinweises auf die Patenterteilung: **26.04.2017**
(21) Anmeldenummer: 10008671.9
(22) Anmeldetag: 19.08.2010
(51) Int. Cl.: G06F 3/0485, G06F 3/0482, B60K 35/00, B60K 37/06

(54) **Bedienvorrichtung und Verfahren zum Bereitstellen einer Bedienvorrichtung**
Operating device and method for providing an operating device
Dispositif de commande et procédé de préparation d'un dispositif de commande

(30) Priorität: 04.09.2009 DE 102009040254
(43) Veröffentlichungstag der Anmeldung: 09.03.2011
(60) Teilanmeldung: 17161540.4
(73) Patentinhaber: Volkswagen Aktiengesellschaft, 38440 Wolfsburg (DE)
(72) Erfinder: Geißler, Jens, 38102 Braunschweig (DE); Burghoff, Christian, 38106 Braunschweig (DE); Hentschel, Jenika, 38114 Braunschweig (DE); Missall, Markus, 38102 Braunschweig (DE); Grote, Gerald, 38118 Braunschweig (DE); Kuhn, Mathias, 14129 Berlin (DE)
(74) Vertreter: Reitstötter Kinzebach

(56) Entgegenhaltungen:
- DE-A1-102006 062 416
- DE-A1-102007 039 442
- DE-U1-202009 001 077
- DE-U1-212007 000 053
- US-A1- 2005 115 816
- US-A1- 2007 189 737

## Beschreibung

Die vorliegende Erfindung betrifft ein Verfahren zum Bereitstellen einer Bedienvorrichtung, bei dem mittels der Betätigung einer Eingabeeinrichtung eine Informationsanzeige auf einer Anzeigefläche gesteuert wird, wobei die Anzeigefläche einen ersten und einen zweiten Anzeigebereich aufweist, in denen Statusinformationen angezeigt werden, wobei die anzeigbaren Informationen zumindest zwei Listen mit jeweils mehreren Listeneinträgen umfassen. Bei dem Verfahren wird durch einen zweiten Betätigungsvorgang, welcher ein einmaliges Betätigen der Eingabeeinrichtung ist, während der Anzeige eines Anzeigeinhalts, der einem ausgewählten Listeneintrag der ersten Liste zugeordnet ist, zu einer Anzeige eines Anzeigeinhalts, der einem Listeneintrag der zweiten Liste zugeordnet ist, gewechselt. Dabei wird durch den zweiten Betätigungsvorgang während der Anzeige des Anzeigeinhalts, der dem ausgewählten Listeneintrag der ersten Liste zugeordnet ist, zunächst zu einer Darstellung eines ersten graphischen Objekts, welches der ersten Liste zugeordnet ist, auf einem virtuellen, perspektivisch dargestellten Ring mit mehreren Objekten gewechselt. Danach wird der Ring gedreht, bis ein zweites graphisches Objekt, das der zweiten Liste zugeordnet ist, im Vordergrund angezeigt und schließlich wird zu der Anzeige des Anzeigeinhalts gewechselt, der dem Listeneintrag der zweiten Liste zugeordnet ist.

Ferner betrifft die Erfindung eine Bedienvorrichtung mit einer Anzeigefläche zur Anzeige von Informationen, wobei die anzeigbaren Informationen zumindest zwei Listen mit jeweils mehreren Listeneinträgen umfassen, einer Steuervorrichtung zum Erzeugen von Graphikdaten für die Anzeige auf der Anzeigefläche und einer Eingabeeinrichtung zum Steuern der Informationsanzeige auf der Anzeigefläche, wobei die Anzeigefläche einen ersten und einen zweiten Anzeigebereich aufweist, in denen Statusinformationen angezeigt werden. Dabei wird auf einen zweiten mittels der Eingabeeinrichtung ausführbaren Betätigungsvorgang, welcher ein einmaliges Betätigen der Eingabeeinrichtung ist, während der Anzeige eines Anzeigeinhalts, der einem ausgewählten Listeneintrag der ersten Liste zugeordnet ist, die Steuervorrichtung eingerichtet ist, die Anzeigefläche so anzusteuern, dass zur Anzeige eines Anzeigeinhalts, der einem Listeneintrag der zweiten Liste zugeordnet ist, gewechselt wird. Dabei ist auf den zweiten mittels der Eingabeeinrichtung ausführbaren Betätigungsvorgang während der Anzeige des Anzeigeinhalts, der dem ausgewählten Listeneintrag der ersten Liste zugeordnet ist, zunächst zu einer Darstellung des ersten graphischen Objekts, welches der ersten Liste zugeordnet ist, auf einem virtuellen, perspektivisch dargestellten Ring mit mehreren Objekten wechselbar. Danach ist der Ring drehbar, bis ein zweites graphisches Objekt, das der zweiten Liste zugeordnet ist, im Vordergrund angezeigt wird, und schließlich ist zu der Anzeige des Anzeigeinhalts wechselbar, der dem Listeneintrag der zweiten Liste zugeordnet ist.

Die Bedienvorrichtung ist insbesondere Teil eines Fahrzeugs. Sie kann jedoch auch in Verbindung mit anderen Geräten, insbesondere tragbaren Geräten, wie einem Musikspieler, einem Mobiltelefon oder einem mobilen Navigationssystem eingesetzt werden.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Damit der Nutzer die auf einer Anzeigefläche dargestellte Information so schnell und intuitiv wie möglich erfassen kann und um ihm außerdem eine schnelle, intuitive und einfache Bedienung von Einrichtungen zu ermöglichen, deren Informationen dargestellt werden, ist aus der WO 2009/024474 A1 ein Verfahren zum Anzeigen von Informationen bekannt, bei dem ein flächiges Objekt auf einem Display graphisch dargestellt wird, wobei das graphische Objekt ein Anzeigefeld und ein Bedienfeld umfasst. Das Anzeigefeld wird auf einer Seite des flächigen graphischen Objekts und das Bedienfeld auf der anderen Seite des flächigen graphischen Objekts dargerstellt. Auf eine Eingabe mittels einer Eingabeeinrichtung werden die Graphikdaten zur Anzeige auf dem Display so verändert, dass sich das graphische Objekt bei einer perspektivischen Darstellung auf dem Display von einer Seite zu der anderen Seite dreht.

Des Weiteren ist aus der WO 2009/024400 A1 ein Verfahren zum Anzeigen von Informationen bekant, bei dem graphische Objekte, welche auf einer Anzeigefläche angezeigt werden, auf einem virtuellen, perspektivisch dargestellten Ring angeordnet dargestellt werden, wobei auf eine Eingabe mittels einer Eingabeeinrichtung eine Recheneinheit einer Benutzerschnittstelleneinrichtung die Graphikdaten für die Anzeige auf der Anzeigefläche so verändert, dass sich die Objekte auf dem virtuellen Ring karussellartig drehen. Dabei wird insbesondere mittels der Eingabeeinrichtung eine Linie auf der Anzeigefläche eingegeben und der Winkel, um den die Objekte gedreht werden, steht in einer direkten Beziehung zu der eingegebenen Länge auf der Anzeigefläche.

Die US 2007/0189737 A1 beschreibt ein Multimedia-Steuerungssystem. Das Steuerungssystem stellt dabei einen Menü-Knopf bereit, mittels welchem von einem Desktop zu einem Hauptmenü navigiert werden kann. Zudem kann mit dem Menü-Knopf auch von einer beliebigen Anzeige zu einer vorherigen Anzeige oder zu einer vorherigen Menüebene zurück navigiert werden. Ferner wird beschrieben, dass ein Menü als Karussell angezeigt werden kann. Dabei können Menüpunkte in ihrer Position auf dem Display verschoben werden, wenn ein Steuerbefehl erhalten wird. Wird ein Menüeintrag eines Menüpunktes angezeigt, kann ein Nutzer, um zu einem Menüeintrag eines anderen Menüpunktes zu gelangen, zu dem Karussell zurücknavigieren, und einen gewünschten Menüpunkt durch eine weitere Bedienaktion gesondert auswählen.

Bei dem in der DE 10 2007 039 442 A1 beschriebenen Verfahren zum Anzeigen von Informationen werden graphische Objekte auf einem Ring angeordnet dargestellt, wobei jedem graphischen Objekt eine Anzeige zugeordnet ist, durch die beispielsweise ein Menü dargestellt und bedient werden kann. Durch Betätigen einer Schaltfläche kann von einem solchen Menü zu einem anderen gewechselt werden, wobei als Zwischenstufe eine Drehung des Rings dargestellt wird.

Die US 2005/115816 A1 schließlich beschreibt eine Bedienoberfläche eines Radiogerätes, bei der zunächst der Name des aktuell eingestellten Senders angezeigt wird. Nähert sich die Hand des Nutzers dem Gerät, so wird zu einer Ansicht mit einer Liste der verfügbaren Radiostationen umgeschaltet. Ferner kann durch Betätigen einer Taste zwischen verschiedenen Übertragungsmodi (FM/AM/XM) umgeschaltet werden.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Auch bei der Anzeige von Informationen in mobilen Geräten sollte die Information schnell und intuitiv erfasst werden können. Der Nutzer des mobilen Geräts nimmt nämlich die angezeigte Information häufig auf, während er andere Tätigkeiten ausführt. Dabei ergibt sich auch das Problem, dass die Anzeigefläche eines mobilen Geräts vielfach relativ klein ist, so dass es besonders wichtig ist, dass die dargestellten Informationen leicht erfassbar und ein Wechsel des Informationsinhalts leicht nachvollziehbar ist.

Der vorliegenden Erfindung liegt die Aufgabe zugrunde ein Verfahren und eine Bedienvorrichtung der eingangs genannten Art bereitzustellen, mit denen die angezeigten Informationen so schnell und intuitiv wie möglich erfassbar sind. Außerdem soll der Betrachter auch einen Wechsel des Anzeigeinhalts einfach und intuitiv nachvollziehen können.

Erfindungsgemäß wird diese Aufgabe durch ein Verfahren mit den Merkmalen des Anspruchs 1 und eine Bedienvorrichtung mit den Merkmalen des Anspruchs 6 gelöst. Vorteilhafte Aus- und Weiterbildungen ergeben sich aus den abhängigen Ansprüchen.

Das erfindungsgemäße Verfahren ist dadurch gekennzeichnet, dass durch einen ersten Betätigungsvorgang während der Anzeige eines Anzeigeinhalts, der dem ausgewählten Listeneintrag der ersten Liste zugeordnet ist, zumindest eine Teilmenge der ersten Liste angezeigt wird, wobei der erste Anzeigebereich verschwindet und der zweite Anzeigebereich kleiner dargestellt wird.

Ferner wird durch einen zweiten Betätigungsvorgang, welcher ein einmaliges Betätigen der Eingabeeinrichtung ist, während der Anzeige des Anzeigeinhalts, der dem ausgewählten Listeneintrag der ersten Liste zugeordnet ist, zur Anzeige eines Anzeigeinhalts, der einem Listeneintrag der zweiten Liste zugeordnet ist, gewechselt.

Unter einer *Liste* wird im Sinne der Erfindung ein Datenbestand verstanden, der in eine Vielzahl von Dateneinheiten einteilbar ist. Die Dateneinheiten entsprechen dann den Listeneinträgen. Die Dateneinheiten können in eine bestimmte Reihenfolge gebracht werden, so dass sie dann eine Listendarstellung bilden. Die Liste kann beispielsweise eine Vielzahl von Audio- oder Videodateien umfassen. Ferner kann sie Einträge eines Telefon- oder Adressbuchs, Einträge zu einem Menü einer hierarchischen Menüstruktur zur Bedienung einer Einrichtung oder andere Dateneinheiten betreffen, die sich in einer Liste zusammenfassen und abstrakt an Hand eines grafischen Objekts darstellen lassen.

Durch die beiden Betätigungsvorgänge des erfindungsgemäßen Verfahrens kann der Nutzer besonders einfach und intuitiv innerhalb der anzeigbaren Informationen navigieren. Er kann einfach zwischen Kontexten verschiedener Listen und innerhalb der Listeneinträge einer Liste wechseln.

Erfindungsgemäß wird durch den zweiten Betätigungsvorgang während der Anzeige des Anzeigeinhalts, der dem ausgewählten Listeneintrag der ersten Liste zugeordnet ist, zunächst zu einer Darstellung eines ersten graphischen Objekts, welches der ersten Liste zugeordnet ist, auf einem virtuellen, perspektivisch dargestellten Ring mit den mehreren Objekten gewechselt, danach der Ring gedreht, bis ein zweites graphisches Objekt, das der zweiten Liste zugeordnet ist, im Vordergrund angezeigt wird und schließlich wird zu der Anzeige des Anzeigeinhalts gewechselt, der dem Listeneintrag der zweiten Liste zugeordnet ist. Dieser Übergang der Anzeige wird insbesondere in einer automatisch ablaufenden Animation angezeigt, für die eine weitere Betätigung durch den Nutzer nicht mehr erforderlich ist. Durch die Darstellung des Übergangs kann der Nutzer den Wechsel in der Anzeige von einem Listeneintrag einer Liste zu dem Listeneintrag einer anderen Liste besonders gut nachvollziehen, so dass ihm die Orientierung innerhalb der in Listen organisierten Informationsstruktur erleichtert wird.

Bei dem erfindungsgemäßen Verfahren kann der Nutzer durch mehrmaliges Ausführen des ersten Betätigungsvorgangs einen Listeneintrag der ersten Liste markieren und/oder auswählen. Er kann beispielsweise durch den ersten Betätigungsvorgang einen Bildlauf (Scrollen) in der ersten Liste erzeugen.

Des Weiteren kann durch den zweiten Betätigungsvorgang festgelegt werden, in welchem Drehsinn der Ring gedreht wird. Der Ring enthält mehrere Objekte. Durch mehrmaliges Ausführen des zweiten Betätigungsvorgangs wird insbesondere eines der Objekte des Rings ausgewählt. Bei dem Übergang der Anzeige für den Listeneintrag einer Liste zu dem Listeneintrag einer anderen Liste wird der Ring insbesondere perspektivisch um eine vertikale Achse gedreht.

Die erfindungsgemäße Bedienvorrichtung ist dadurch gekennzeichnet, dass auf einen ersten mittels der Eingabeeinrichtung ausführbaren Betätigungsvorgang während der Anzeige des Anzeigeinhalts, der dem ausgewählten Listeneintrag der ersten Liste zugeordnet ist, die Steuervorrichtung eingerichtet ist, die Anzeigefläche so anzusteuern, dass zumindest eine Teilmenge der ersten Liste angezeigt wird, wobei der erste Anzeigebereich verschwindet und der zweite Anzeigebereich kleiner dargestellt wird.

Insbesondere wird der vorstehend beschriebene Übergang zwischen der Darstellung eines Listeneintrags der ersten Liste zu der Darstellung eines Listeneintrags der zweiten Liste mittels der Darstellung der Objekte, welche auf einem virtuellen, perspektivisch dargestellten Ring dargestellt werden, mittels der Steuervorrichtung der erfindungsgemäßen Bedienvorrichtung ausgeführt.

Die Eingabeeinrichtung der erfindungsgemäßen Bedienvorrichtung ist insbesondere von der Anzeigefläche abgesetzt angeordnet. Sie weist beispielsweise für den ersten Betätigungsvorgang einen ersten Wippschalter und/oder für den zweiten Betätigungsvorgang einen zweiten Wippschalter auf. Bevorzugt weist die Eingabeeinrichtung für den ersten und den zweiten Betätigungsvorgang einen Kreuzwippschalter auf. Ferner weist die Eingabeeinrichtung insbesondere für den ersten Betätigungsvorgang zumindest einen ersten Tastschalter, bevorzugt zwei Tastschalter, und/oder für den zweiten Betätigungsvorgang zumindest einen zweiten Tastschalter, bevorzugt zwei Tastschalter, auf. Diese Tastschalter können von dem Kreuzwippschalter bereitgestellt werden.

Des Weiteren betrifft die Erfindung ein Fahrzeug mit der erfindungsgemäßen Bedienvorrichtung. In diesem Fall ist die Eingabeeinrichtung insbesondere am Lenkrad des Fahrzeugs angeordnet oder von einer am Lenkrad befindlichen Hand eines Nutzers aus bedienbar.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen und
- die Figur 2 bis 22: zeigen Anzeigen auf der Anzeigefläche, die von einem Ausführungsbeispiel des erfindungsgemäßen Verfahrens erzeugt werden.

Das im Folgenden beschriebene Ausführungsbeispiel betrifft den Einsatz der Bedienvorrichtung und des Verfahrens in einem Fahrzeug, insbesondere einem Kraftfahrzeug. Mittels Bedienvorrichtung und durch das Verfahren können den Fahrzeuginsassen Informationen angezeigt werden. Ferner können die Fahrzeuginsassen mittels der Bedienvorrichtung Einrichtungen des Fahrzeugs bedienen und die Anzeige steuern. Es wird jedoch darauf hingewiesen, dass die Bedienvorrichtung und das Verfahren auf gleiche Weise auch in anderen Geräten, wie zum Beispiel mobilen Geräten, eingesetzt werden können.

Die Bedienvorrichtung umfasst eine Anzeigefläche 1, die so im Innenraum des Fahrzeugs angeordnet ist, dass sie für zumindest einen Fahrzeuginsassen, insbesondere den Fahrer, gut sichtbar ist. Die Anzeigefläche 1 kann von einem Display, insbesondere einem Flüssigkristalldisplay, beliebiger Bauart bereitgestellt werden.

Die Anzeigefläche 1 ist mit einer Steuervorrichtung 2 verbunden, mit welcher Grafikdaten zur Informationsdarstellung auf der Anzeigefläche 1 erzeugbar sind, so dass eine Anzeigevorrichtung gebildet wird. Die Anzeigefläche 1 ist im hier beschriebenen Ausführungsbeispiel in drei Anzeigebereiche 5, 6 und 9 unterteilt. In den Anzeigebereichen 5 und 6 werden Statusinformationen angezeigt. Im mittleren Bereich 9 werden Informationen zu einem aktiven Kontext wiedergegeben, wie es später erläutert wird.

Ferner ist die Steuervorrichtung 2 mit einer Eingabeeinrichtung 4 verbunden, über welche der Benutzer Einrichtungen des Fahrzeugs, deren Informationen auf der Anzeigefläche 1 angezeigt werden, steuern kann. Ferner kann mittels der Eingabeeinrichtung 4 die Informationsanzeige auf der Anzeigefläche 1 gesteuert werden.

Die Eingabeeinrichtung 4 ist von der Anzeigefläche 1 abgesetzt im Fahrzeug angeordnet. Sie ist insbesondere in das Lenkrad des Fahrzeugs integriert. Ferner kann sie so in der Nähe des Lenkrads des Fahrzeugs angeordnet sein, dass sie von einer am Lenkrad befindlichen Hand eines Nutzers aus bedienbar ist.

Die Eingabeeinrichtung 4 umfasst insbesondere ein mechanisches Betätigungselement, nämlich einen Kreuzwippschalter 10. Der Kreuzwippschalter 10 zeichnet sich dadurch aus, dass er auf zwei senkrecht zueinander stehenden Achsen jeweils einen Wippschalter umfasst, der wiederum auf jeder Seite der Wippe Tastschalter aufweist. Der senkrechte Wippschalter des Kreuzwippschalters 10 umfasst einen oberen Druckpunkt 13 und einen unteren Druckpunkt 14. Der horizontale Wippschalter des Kreuzwippschalters 10 umfasst einen linken Druckpunkt 11 und einen rechten Druckpunkt 12. Das einmalige Drücken auf einen der Druckpunkte 11 bis 15 betätigt somit einen Tastschalter des Kreuzwippschalters 10. Ein solches einmaliges Drücken wird als Betätigungsvorgang aufgefasst. Des Weiteren kann der Kreuzwippschalter 10 noch einen mittleren Druckpunkt 15 aufweisen. Wenn der Nutzer auf diesen mittleren Druckpunkt 15 drückt, wird der Kreuzwippschalter 10 insgesamt hereingedrückt. Der Kreuzwippschalter 10 umfasst somit insgesamt fünf Tastschalter. Mittels der Eingabeeinrichtung 4 kann die Anzeige auf der Anzeigefläche 1 gesteuert werden, wie es später erläutert wird.

Die Steuervorrichtung 2 ist ferner mit einer Systemuhr 8 und mit einem Fahrzeugbus 7 über eine Schnittstelle gekoppelt. Über den Fahrzeugbus 7 ist die Steuervorrichtung 2 mit Fahrerassistenzsystemen des Fahrzeugs verbunden. Die Steuervorrichtung 2 erhält über den Fahrzeugbus 7 Daten dieser Fahrerassistenzsysteme und bereitet die so auf, dass diese Daten dem Fahrer bzw. den Fahrzeuginsassen über die Anzeigefläche 1 grafisch dargestellt werden. Die Steuervorrichtung 2 erzeugt hierfür Grafikdaten für auf der Anzeigefläche 1 darstellbare Objekte, welche unter anderem die Informationen der Fahrerassistenzsysteme grafisch darstellen. Ferner ist die Steuervorrichtung 2 über den Fahrzeugbus 7 mit verschiedenen Informations- und Kommunikations- sowie Unterhaltungseinrichtungen und verschiedenen Steuergeräten des Fahrzeugs verbunden. Die vielfältigen Informationen dieser Einrichtungen des Fahrzeugs werden in der Steuervorrichtung 2 aufbereitet und in Grafikdaten für eine grafische Darstellung umgewandelt. Für Animationen der grafischen Darstellung auf der Anzeigefläche umfasst die Steuervorrichtung eine Recheneinheit 3, welche beim Erzeugen von Zwischenbildern auf die Systemuhr 8 zurückgreift.

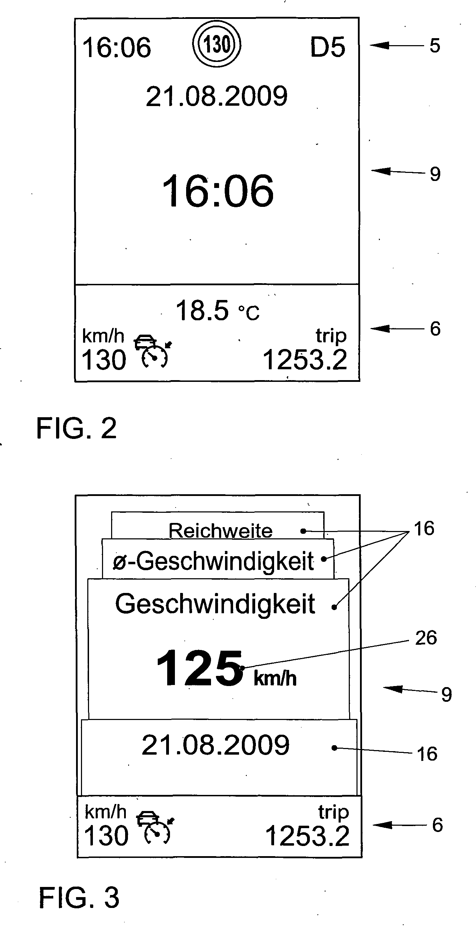

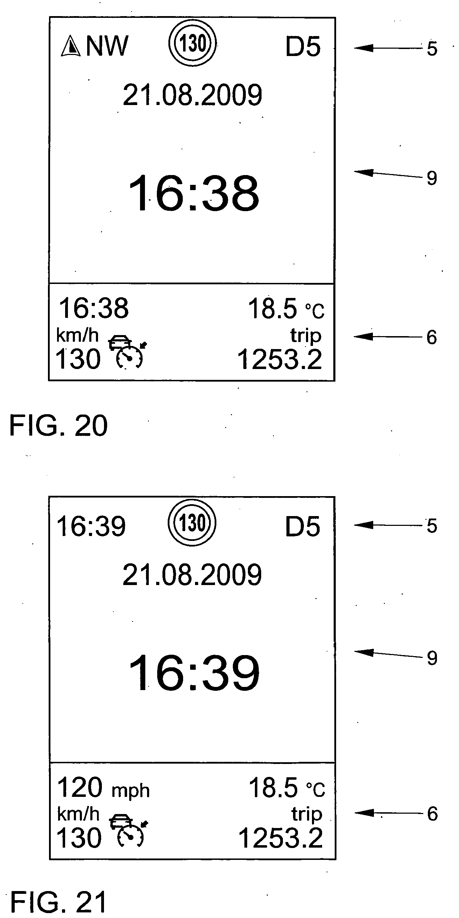

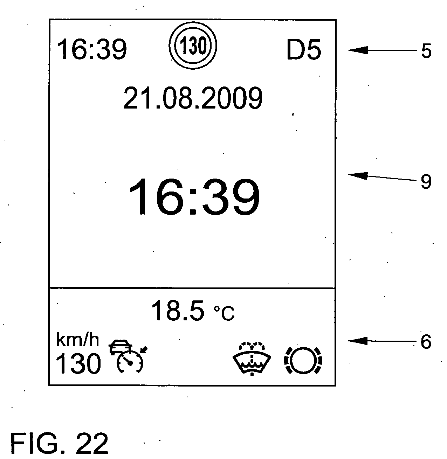

Im Folgenden wird ein Ausführungsbeispiel des erfindungsgemäßen Verfahrens, welches von der vorstehend beschriebenen Bedienvorrichtung ausführbar ist, mit Bezug zu den Figuren 2 bis 22 im Detail erläutert:

Ausgangspunkt für die im Folgenden beschriebenen Anzeigen auf der Anzeigefläche 1 ist die in Fig. 2 wiedergegebene Darstellung. Im Anzeigebereich 5 wird die aktuelle Uhrzeit und der aktuelle Gang des Getriebes des Fahrzeugs angezeigt. Des Weiteren kann optional ein von einem Fahrerassistenzsystem erfasstes Verkehrszeichen dargestellt werden. In dem in Fig. 2 gezeigten Fall wird das Verkehrszeichen für eine Geschwindigkeitsbegrenzung wiedergegeben.

Der Anzeigebereich 6 ist bei dem vorliegenden Ausführungsbeispiel durch eine horizontale Linie von dem Bereich 9 nach oben abgegrenzt. In diesem Bereich 6 wird bei der in Fig. 2 wiedergegebenen Anzeige die aktuelle Außentemperatur, die aktuelle Fahrzeuggeschwindigkeit und der Tageskilometerzähler angezeigt. Ferner können Hinweise von Fahrerassistenzsystemen in diesem Bereich 6 angezeigt werden.

Die Statusanzeigen in den Anzeigenbereichen 5 und 6 werden von der Steuervorrichtung 2 so angesteuert, dass die aktuelle Ganganzeige und die Temperaturanzeige immer sichtbar sind.

Der Anzeigebereich 9 umfasst in dem in Fig. 2 gezeigten Fall nur die aktuelle Uhrzeit und das aktuelle Datum. Der Anzeigeinhalt, welcher in dem Bereich 9 wiedergegeben wird, ist einem ausgewählten Listeneintrag einer ersten Liste zugeordnet. Um zum Anzeigeinhalt weiterer Listeneinträge dieser ersten Liste zugelangen, kann der Nutzer einen Betätigungsvorgang mittels der Eingabeeinrichtung 4 ausführen. Um zu dem Anzeigeinhalt des vorhergehenden Listeneintrags zu gelangen, drückt der Nutzer auf den Druckpunkt 13 des Kreuzwippschalters 10; um zu dem Anzeigeinhalt eines nachfolgenden Listeneintrags der ersten Liste zu gelangen, drückt der Nutzer den Druckpunkt 14 des Kreuzwippschalters 10.

Wenn der Nutzer beispielsweise auf den Druckpunkt 13 des Kreuzwippschalters 10 drückt und hierdurch den diesem Druckpunkt 13 zugeordneten Tastschalter betätigt, wechselt die Anzeige auf der Anzeigefläche 1 von der in Fig. 2 wiedergegebenen Darstellung zu der in Fig. 3 wiedergegebenen Darstellung. Wie aus Fig. 3 ersichtlich, verschwindet der Anzeigebereich 5. Ferner wird der Anzeigebereich 6 kleiner dargestellt. Der Anzeigebereich 6 enthält nicht mehr die Temperaturanzeige und die horizontale Linie, welche den Anzeigebereich 6 von dem Anzeigebereich 9 abgrenzt, ist nach unten verschoben. Der Anzeigebereich 9 wird hingegen größer dargestellt.

Im Anzeigebereich 9 werden nun die Listeneinträge 16 der ersten Liste angezeigt. In dem in Fig. 3 wiedergegebenen Beispiel werden als Teilmenge der ersten Liste insgesamt vier Listeneinträge 16 mittels eines flächigen, kartenartigen Anzeigeobjekt dargestellt. Bei einer anderen Ausgestaltung werden nur zwei oder drei Listeneinträge 16 dargestellt. Die Listeneinträge 16 geben im Wesentlichen bereits den Anzeigeinhalt wieder, welcher dem jeweiligen Listeneintrag 16 zugeordnet ist. Bei der perspektivischen Darstellung der Listeneinträge 16 ist jedoch nur ein Teil dieses Anzeigeinhalts sichtbar. Bestimmte Bereiche sind von perspektivisch weiter vorne dargestellten Listeneinträgen verdeckt bzw. sind nicht mehr im Anzeigebereich 9 enthalten. Der Anzeigeinhalt des Listeneintrags 16 der in Fig. 2 wiedergegeben wurde, ist nach der Betätigung des Tastschalters mit dem Druckpunkt 13 bei der Darstellung in Fig. 3 als unterster Listeneintrag so dargestellt, dass nur noch die Datumsangabe sichtbar ist. Die weiteren Listeneinträge 16 sind perspektivisch so angeordnet, dass sie auf einer perspektivisch nach hinten gehenden Kurve angeordnet sind. Bei dem Listeneintrag 16 der hinter dem Listeneintrag 16 mit der Datumsangabe angeordnet ist, und welchem als Anzeigeinhalt die aktuelle Fahrzeuggeschwindigkeit zugeordnet ist, ist das Wort "Geschwindigkeit" sowie die Wiedergabe der aktuellen Geschwindigkeit erkennbar. Die aktuelle Geschwindigkeit bei der Anzeige des Listeneintrags 16 ist dabei farblich hervorgehoben dargestellt; sie ist das Informationselement 26 des Listeneintrags 16. Die Angabe "125 km/h" ist insbesondere in einer Signalfarbe, z. B. in Rot, dargestellt. Die perspektivisch weiter hinten liegenden Listeneinträge 16 sind nur noch anhand der Hauptbegriffe für die Durchschnittsgeschwindigkeit und die Reichweite identifizierbar.

Durch Betätigung der Druckpunkte 13 bzw. 14 des Kreuzwippschalters 10 kann der Nutzer einen Bildlauf (Scrollen) in der ersten Liste erzeugen. Aufeinander folgend gelangt der Nutzer auf diese Weise zu folgenden Listeneinträgen 16: dem Listeneintrag mit der Datumsangabe und der Uhrzeit, wobei die Uhrzeit farblich hervorgehoben dargestellt wird; dem Listeneintrag für die Fahrzeuggeschwindigkeit, wobei die aktuelle Fahrzeuggeschwindigkeit farblich hervorgehoben dargestellt ist; dem Listeneintrag für die Durchschnittsgeschwindigkeit, wobei die aktuelle Durchschnittsgeschwindigkeit farblich hervorgehoben dargestellt ist; dem Listeneintrag für die verbleibende Reichweite, wobei die verbleibende Reichweite in Kilometern farblich hervorgehoben dargestellt ist; dem Listeneintrag für den Durchschnittsverbrauch, wobei der aktuelle Durchschnittsverbrauch in l/100 km, farblich hervorgehoben dargestellt ist; dem Listeneintrag für den aktuellen Verbrauch, wobei der aktuelle Verbrauch in l/100 km farblich hervorgehoben dargestellt ist; dem Listeneintrag für Verkehrszeichen, die von einem Fahrerassistenzsystem erfasst worden sind.

Während des Bildlaufs durch die Listeneinträge 16 der ersten Liste werden die Listeneinträge 16 perspektivisch von oben hinten nach unten vorne oder von unten vorne nach oben hinten gedreht werden. Bei der einmaligen Betätigung des Druckpunkts 13 bzw. 14 rückt die Liste dabei um einen Listeneintrag 16 weiter. Diese Veränderung der Teilmenge der Listeneinträge 16 der ersten Liste erfolgt jedoch nicht sprunghaft, sondern in einer Bildfolge (Animation), bei der mehrere interpolierte Zwischenbilder angezeigt werden. Die Animation zeichnet sich dabei dadurch aus, dass die perspektivisch dargestellte Bewegung zu Beginn eine Beschleunigung aufweist und am Ende abgebremst wird.

Im Folgenden wird im Detail erläutert, wie die Listeneinträge 16 der ersten Liste bei einem Bildlauf bewegt werden:

Bei dem Bildlauf durch die Liste wird die Teilmenge der angezeigten Listeneinträge 16 so verändert, dass Listeneinträge 16 verschwinden und stattdessen neue Listeneinträge angezeigt werden. Während des Bildlaufs wird dabei die Position, die Größe und die Transparenz der angezeigten Listeneinträge verändert. Dabei wird ein Listeneintrag 16 zu der vorherigen Position eines benachbarten Listeneintrags bewegt, wobei er bei dieser Bewegung zunächst beschleunigt bewegt wird und danach abgebremst bewegt wird. Der Bildlauf setzt sich somit aus Bildfolgen zusammen, bei denen ein Listeneintrag 16 jeweils um eine Position weiterbewegt wird. Wenn ein Listeneintrag 16 bei der letzten angezeigten Position ist, verschwindet er bei der nächsten Bildfolge. Gleichzeitig taucht auf der anderen Seite der Liste ein neuer Listeneintrag 16 auf.

Die Länge des Zeitintervalls, welches ein Listeneintrag 16 benötigt, um zu der vorherigen Position eines benachbarten Listeneintrags zu gelangen, liegt in einem Bereich von 100 ms bis 600 ms, insbesondere in einem Bereich von 300 ms bis 500 ms, bevorzugt ist sie 400 ms. Die Zwischenbilder für die Bildfolge zwischen zwei Positionen für einen Listeneintrag 16 werden von der Recheneinheit 3 der Steuervorrichtung 2 durch Interpolation berechnet.

Die Position und die Größe der angezeigten Listeneinträge 16 wird bei dem Bildlauf so verändert, dass eine perspektivisch wiedergegebene Bildfolge angezeigt wird, bei der sich in einer Bildlaufrichtung der Listeneinträge 16 von einer Seite der Anzeigefläche 1, zum Beispiel der unteren Seite, von vorne zur anderen Seite der Anzeigefläche 1, zum Beispiel der oberen Seite, nach hinten bewegen und in der anderen Bildlaufrichtung umgekehrt von der anderen Seite der Anzeigefläche 1, d.h. der oberen Seite, von hinten zu der einen Seite der Anzeigefläche 1, d.h. der unteren Seite, nach vorne bewegen. Wie bei der perspektivischen Darstellung üblich, werden dabei hintere Listeneinträge 16 kleiner als perspektivisch vordere Listeneinträge 16 angezeigt.

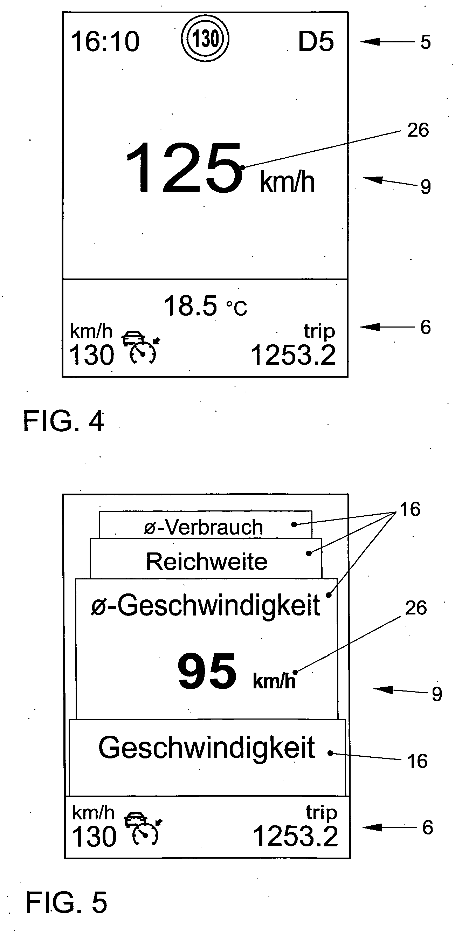

Wie aus Figur 3 und 5 ersichtlich, können die Listeneinträge 16 als Karten dargestellt werden. Die Karten werden jedoch so wiedergegeben, dass die Normale der Karte bei der perspektivisch wiedergegebenen Bildfolge senkrecht zur Anzeigefläche 1 ausgerichtet ist. Der Betrachter schaut somit immer senkrecht auf die Karte des Listeneintrags 16. Perspektivische Verzerrungen des Anzeigeinhalts des Listeneintrags 16 werden nicht erzeugt, damit der Anzeigeinhalt des Listeneintrags 16 auch während des Bildlaufs gut ablesbar bleibt.

Bei der perspektivisch wiedergegebenen Bildfolge werden die Listeneinträge 16 beispielsweise um eine außerhalb der Anzeigefläche 1 liegende Achse geschwenkt, wobei bei der Schwenkbewegung die Listeneinträge 16 selbst nicht gedreht werden. Gemäß einem anderen Beispiel kann sich die Bewegung der Listeneinträge 16 bei der Bildfolge aus einer Überlagerung einer Schwenkbewegung um eine außerhalb der Anzeigefläche 1 liegende Achse und einer senkrecht zur Anzeigefläche 1 gerichteten Translationsbewegung ergeben, wobei auch in diesem Fall bei der Schwenkbewegung die Listeneinträge 16 selbst nicht gedreht werden.

Die Transparenz der Listeneinträge 16 bzw. die Transparenz der Darstellung des Anzeigeinhalts der Listeneinträge 16 wird während des Bildlaufs so verändert, dass perspektivisch hintere Listeneinträge transparenter als perspektivisch vordere Listeneinträge 16 angezeigt werden.

Im Folgenden werden zwei Beispiele für die Positionen der Listeneinträge 16 auf der Anzeigefläche 1 gegeben. Die Bildfolge wird zwischen diesen Positionen animiert:

Jedem Listeneintrag 16 wird eine bestimmte Position auf der Anzeigefläche 1 zugeordnet. Hierfür wird im Anzeigebereich 9, in welchem die Listeneinträge 16 dargestellt werden, ein Koordinatensystem definiert, dessen Nullpunkt in der linken unteren Ecke des Anzeigebereichs 9 ist. Die x-Achse des Koordinatensystems erstreckt sich nach rechts, wobei dem rechten Rand des Anzeigebereichs 9 der Wert 1 zugeordnet wird. Die y-Achse des Koordinatensystems erstreckt sich senkrecht zur x-Achse nach oben, wobei dem oberen Rand des Anzeigebereichs 9 auch der Wert 1 zugeordnet wird. Die Position eines Listeneintrags 16 wird durch die x-y-Koordinaten des Mittelpunkts des Listeneintrags 16 angegeben.

Die x- und y-Werte geben somit relative Positionen des Anzeigebereichs 9 an. Die absoluten Positionen können dann in Abhängigkeit von der tatsächlichen Größe des Anzeigebereichs 9 berechnet werden.

Ferner wird jedem Listeneintrag 16 eine Größe bzw. eine Skalierung zugeordnet, wobei dem Listeneintrag in der markierten Position die Größe 1 zugeordnet wird. Schließlich wird jedem Listeneintrag 16 eine Transparenz zugeordnet, wobei auch in diesem Fall dem markierten Listeneintrag 16 die Transparenz 1 zugeordnet wird.

Zusätzlich zu den Positionen der angezeigten Listeneinträge 16 werden Eingangspositionen am Start und am Ende als Ziel für die verschwundenen Listeneinträge definiert. Diese haben einen Transparentwert von 0 oder sie liegen außerhalb des sichtbaren Bereichs. Durch die Anordnung, Größe und Transparenz der Listeneinträge 16 wird ein perspektivischer Eindruck erreicht. Je nach gewünschtem Tiefeneindruck können die Anordnung, Größe (Skalierung) und Transparenz modifiziert werden. Dabei ist eine Berechnung anhand von dreidimensionalen Parametern nicht erforderlich, so dass die exakte Positionierung der Listeneinträge 16 nach gestalterischen Gesichtspunkten vereinfacht wird.

Die folgende Tabelle gibt die Lage des Mittelpunkts der Listeneinträge bzw. der Start- und Ende-Positionen sowie die Transparenz und die Größe bzw. Skalierung bei einem Beispiel an, bei dem vier Listeneinträge 16 im Anzeigebereich 9 angezeigt werden:

| | x | y | Transparenz | Skalierung |
|---|---|---|---|---|
| Start | 0,5 | 0,21 | 0 | 0,78 |
| Position 1 | 0,5 | 0,23 | 1 - 0,4 | 0,80 |
| Position 2 | 0,5 | 0,32 | 1 - 0,8 | 0,9 |
| Position 3 | 0,5 | 0,46 | 1 | 1 |
| Position 4 | 0,5 | 0,86 | 1 | 1,05 |
| Ende | 0,5 | 1,06 | 1 | 1,05 |

Der jeweils markierte Listeneintrag 16 wird in diesem Fall bei der Position 3 angezeigt.

Bei der Animation werden die Listeneinträge 16 zwischen den sechs in der Tabelle angegebenen Positionen bewegt.

Des Weiteren können im Anzeigebereich 9 nur drei Listeneinträge 16 angezeigt werden. Die Positionen der Listeneinträge 16, zwischen denen sie beim Bildlauf bewegt werden, sind in der folgenden Tabelle angegeben:

| | x | y | Transparenz | Skalierung |
|---|---|---|---|---|
| Start | 0,5 | 0,24 | 0 | 0,84 |
| Position 1 | 0,5 | 0,30 | 1 - 0,8 | 0,9 |
| Position 2 | 0,5 | 0,44 | 1 | 1 |
| Position 3 | 0,5 | 0,86 | 1 | 1,05 |
| Ende | 0,5 | 1,06 | 1 | 1,05 |

In diesem Fall wird der jeweils markierte Listeneintrag 16 bei der Position 2 angezeigt.

Während des Bildlaufs durch die erste Liste durch Betätigung der Druckpunkte 13 bzw. 14 der jeweiligen Tastschalter des Kreuzwippschalters 10, befindet sich immer ein Listeneintrag in der zweiten Position von unten, bei welcher nicht nur ein Hauptbegriff oben sichtbar ist, sondern auch unterhalb davon weitere Information, die gegebenenfalls farblich hervorgehoben dargestellt wird. Bei diesem Listeneintrag 16 handelt es sich um den jeweils markierten Listeneintrag 16. Wird für ein bestimmtes Zeitintervall kein Betätigungsvorgang mittels der Eingabevorrichtung 4 ausgeführt, wird bei der ersten Liste der markierte Listeneintrag 16 automatisch ausgewählt. Die Länge des Zeitintervalls ist in einem Bereich von 1000 ms bis 5000 ms, bevorzugt 1000 ms oder 5000 ms. Dies bedeutet, dass die Wiedergabe der Listeneinträge 16 im Anzeigebereich 9 verschwindet, und stattdessen der Anzeigeinhalt des ausgewählten Listeneintrags 16 im Anzeigebereich 9 wiedergegeben wird. Der Anzeigebereich 9 verkleinert sich jedoch wieder und es wird zusätzlich der Anzeigebereich 5 dargestellt. Ferner wird der Anzeigebereich 6 wieder vergrößert dargestellt. Wird beispielsweise ausgehend von der in Fig. 3 wiedergegebenen Anzeige die Eingabeeinrichtung 4 für ein bestimmtes Zeitintervall nicht betätigt, wechselt die Darstellung auf der Anzeigefläche 1 nach Ablauf des Zeitintervalls automatisch zu der in Fig. 4 wiedergegebenen Anzeige. Wie in Fig. 4 gezeigt, werden die Anzeigebereiche 5 und 6 wieder wie in Fig. 2 dargestellt. Im Anzeigebereich 9 wird hingegen der Anzeigeinhalt des ausgewählten Listeneintrags 16 wiedergegeben. Der Hauptbegriff für diesen Listeneintrag 16 "Geschwindigkeit" verschwindet in diesem Fall. Es wird nur noch die aktuelle Fahrzeuggeschwindigkeit "125 km/h" angezeigt. Außerdem verschwindet die farbliche Hervorhebung dieses Informationselements 26, die bei den Listeneinträgen 16 noch wiedergegeben wurde, entweder sofort oder nach Ablauf eines weiteren Zeitintervalls.

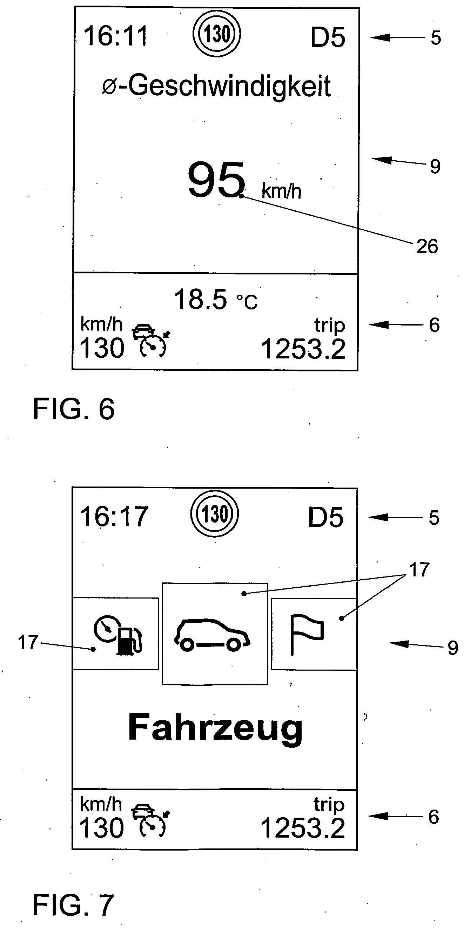

Wenn der Nutzer erneut den Druckpunkt 13 des Kreuzwippschalters 10 betätigt, wird erneut, wie in Fig. 5 gezeigt, die Liste mit den Listeneinträgen 16 wiedergegeben, wobei in der markierten Position der nächste Listeneintrag 16 mit der Durchschnittsgeschwindigkeit angezeigt wird. Wird innerhalb des Zeitintervalls die Eingabeeinrichtung 4 nicht betätigt, während der Listeneintrag 16 für die Durchschnittsgeschwindigkeit fortwährend in der markierten Position verweilt, wird dieser ausgewählt und es wird die in Fig. 6 dargestellte Anzeige wiedergegeben.

Wenn der Nutzer hingegen ausgehend von der beispielsweise in Fig. 2, Fig. 4 oder Fig. 6 wiedergegebenen Anzeige den Druckpunkt 11 bzw. 12 des Kreuzwippschalters 14 betätigt, wechselt die Anzeige zu dem Anzeigeinhalt eines Listeneintrags einer zweiten Liste, wie es im Folgenden erläutert wird:

Wird ein Druckpunkt 11 bzw. 12 des Kreuzwippschalters 10 während der Anzeige des Anzeigeinhalts, der einem Listeneintrag 16 der ersten Liste zugeordnet ist, betätigt, wechselt die Darstellung zunächst zu der Darstellung eines virtuellen, perspektivisch dargestellten Rings in dem Anzeigebereich 9, wie es in Fig. 7 gezeigt ist. Dieser virtuelle perspektivisch dargestellte Ring umfasst mehrere graphische Objekte 17, zumindest zweien dieser Objekte 17 sind Listen zugeordnet. Das Objekt 17 MFA (Multifunktionsanzeige) ist der ersten Liste zugeordnet. Des Weiteren umfasst der Ring folgende Objekte 17, denen jeweils auch eine Liste zugeordnet ist: Ein Objekt 17 betrifft das Fahrzeug selbst, insbesondere Zustandsinformationen zu dem Fahrzeug einschließlich Warnmeldungen; ein Objekt 17 betrifft das Navigationssystem des Fahrzeugs; ein Objekt 17 betrifft eine Telekommunikationseinrichtung des Fahrzeugs; ein Objekt 17 betrifft die Fahrerassistenzsysteme des Fahrzeugs; ein Objekt 17 betrifft das Radio des Fahrzeugs.

Von dem virtuellen Ring werden jeweils drei Objekte 17 angezeigt, von denen das mittlere Objekt 17 sich in der markierten Position befindet. Wenn der Nutzer den Druckpunkt 12 des Kreuzwippschalters 10 betätigt, werden die Objekte 17 entgegen dem Uhrzeigersinn um eine virtuelle senkrechte Achse um eine Position weiter gedreht, so dass das rechte Objekt 17 verschwindet, das mittlere Objekt 17 rechts dargestellt wird, das linke Objekt 17 in der Mitte dargestellt wird und als linkes Objekt 17 ein neues Objekt 17 angezeigt wird. Zu dem Objekt 17 welches sich in der markierten Position befindet, wird zusätzlich, farblich hervorgehoben, ein Schlagwort wiedergegeben. Bei dem in Fig. 7 gezeigten Fall wird als Schlagwort "Fahrzeug" angegeben. Auch in diesem Fall wird die Drehung der Objekte 17 auf dem virtuellen Ring als Animation dargestellt, bei welcher mehrere Zwischenbilder dargestellt werden. Die Animation, bei welcher ein Objekt 17 um eine Position weiter rückt, umfasst zu Beginn eine beschleunigte Bewegung des Objektes 17, welche zum Ende hin abgebremst wird.

Drückt der Nutzer aus den von der in Fig. 6 gezeigten Anzeige einmalig auf den Druckpunkt 11 bzw. 12 des Kreuzwippschalters 10, wechselt die Anzeige zu der Liste des Objekts 17, das benachbart zu dem Objekt der bisherigen Liste auf dem Ring angeordnet ist. Für den Darstellungswechsel wird die vorstehend beschriebenen Animation gezeigt, bei welcher die Objekte 17 auf dem Ring gedreht werden. Betätigt der Nutzer während dieser Animation nochmals den Druckpunkt 11 bzw. 12 des Kreuzwippschalters 10, führt dies dazu, dass der Ring um jeweils eine Position weiter gedreht wird. Durch mehrmalige Betätigung der Druckpunkte 11 bzw. 12 kann der Nutzer somit ein beliebiges Objekt 17 in die markierte Position bringen. Bei Betätigung des Druckpunkts 11 wird der Ring im entgegengesetzten Drehsinn, d. h. im Uhrzeigersinn, gedreht. Verbleibt ein Objekt 17 für ein bestimmtes Zeitintervall in der markierten Position, d. h. es wird während dieses Zeitintervalls die Eingabeeinrichtung 4 nicht betätigt, so wird dieses Objekt 17 automatisch ausgewählt. Die Länge des Zeitintervalls ist in einem Bereich von 1000 ms bis 5000 ms, bevorzugt 1000 ms oder 5000 ms.

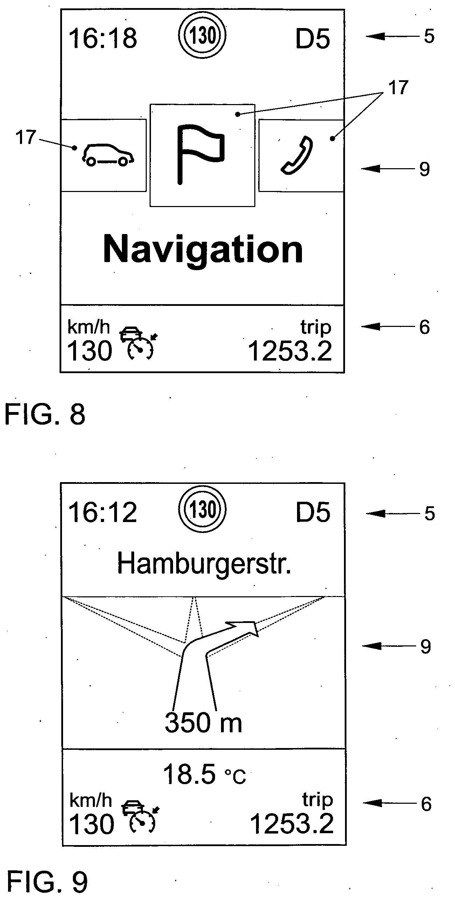

Dreht der Nutzer beispielsweise durch Betätigung des Druckpunktes 12 des Kreuzwippschalters 10 ausgehend von der in Fig. 7 dargestellten Anzeige zu der in Fig. 8 dargestellten Anzeige, bei welcher sich ein Objekt 17 für das Navigationssystem des Fahrzeugs in der markierten Position befindet, und verbleibt dieses Objekt 17 in dieser markierten Position für das vorgegebene Zeitintervall, wechselt die Anzeige nach Ablauf des Zeitintervalls in die in Fig. 9 wiedergegebene Anzeige auf der Anzeigefläche 1. In diesem Fall wird der Anzeigeinhalt eines Listeneintrags der Liste für das Navigationssystem im Anzeigebereich 9 angezeigt. Der Anzeigeinhalt umfasst den Namen der Straße, die aktuell von dem Fahrzeug befahren wird, und eine Graphik des Navigationssystems, welche dem Fahrer des Fahrzeugs Richtungshinweise für das Befahren einer vorgegebenen Route gibt.

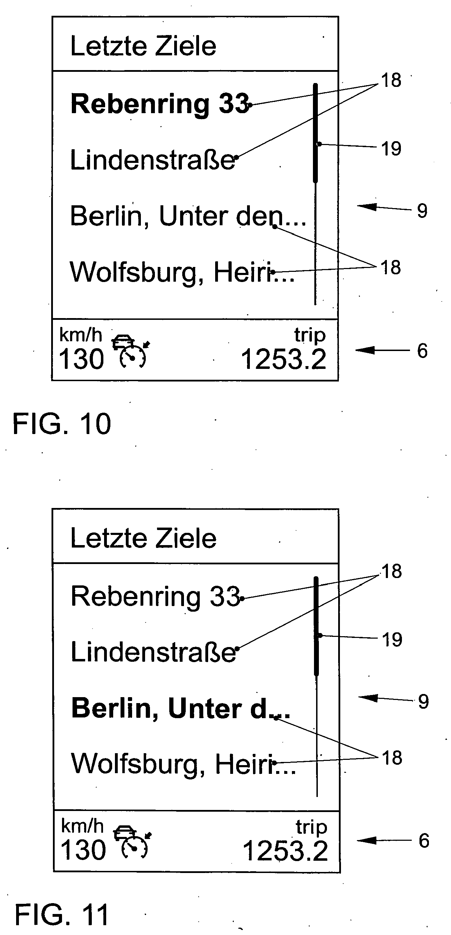

Ausgehend von der in Fig. 9 gezeigten Anzeige kann der Nutzer auch andere Ziele für das Navigationssystem auswählen. Hierfür ist dem Navigationssystem z. B. eine zweite Liste zugeordnet, welche als Listeneinträge die zuletzt angesteuerten Ziele umfasst. Wie bei der ersten Liste zu der Multifunktionsanzeige, kann der Nutzer zu dieser Liste gelangen, indem er den Druckpunkt 13 bzw. 14 des Kreuzwippschalters 10 betätigt. Betätigt der Nutzer beispielsweise den Druckpunkt 13, gelangt er zu der in Fig. 10 dargestellten Anzeige auf der Anzeigefläche 1. Wie bereits mit Bezug zu Fig. 3 bei der ersten Liste erläutert, verschwindet in diesem Fall der Anzeigebereich 5 und der Anzeigebereich 6 wird verkleinert dargestellt, so dass die Temperaturanzeige nicht mehr sichtbar ist. Der Anzeigebereich 9 für den aktuellen Kontext wird hingegen vergrößert und es wird eine Teilmenge der zweiten Liste für die letzten Ziele des Navigationssystems angezeigt. In dem in Fig. 10 gezeigten Fall werden insgesamt vier Listeneinträge 18 angezeigt, wobei ein Listeneintrag 18 markiert dargestellt ist. In dem in Fig. 10 gezeigten Fall ist der Listeneintrag "Rebenring 33" markiert angezeigt. Außerdem wird ein Bildlaufbalken 19 dargestellt, der es dem Nutzer erleichtert, sich innerhalb der zweiten Liste zu orientieren.

Die Darstellung der zweiten Liste für das Navigationssystem weist außerdem die Besonderheit auf, dass im Hintergrund weiterhin die Graphik angezeigt wird, welche dem Fahrer Hinweise zum Befahren der aktuellen Route gibt. Diese Graphik ermöglicht es dem Fahrer, weiterhin der aktuellen Route zu folgen, auch wenn beispielsweise der Beifahrer einen Bildlauf durch die letzten Ziele des Navigationssystems erzeugt.

Der Nutzer kann nun anhand der Druckpunkte 13 bzw. 14 des Kreuzwippschalters 10 durch die Listeneinträge 18 der zweiten Liste scrollen. Betätigt er beispielsweise mehrmals den Druckpunkt 14, verändert sich zunächst die angezeigte Teilmenge der zweiten Liste des Navigationssystems nicht. Der markierte Listeneintrag 18 wandert jedoch nach unten. Erst wenn der unterste Listeneintrag 18 markiert ist, verändert sich die angezeigte Teilmenge der Liste, wenn weiter nach unten gescrollt wird.

Die Art und Weise, wie ein Listeneintrag 18 der zweiten Liste ausgewählt wird, unterscheidet sich jedoch von der Weise, wie ein Listeneintrag 16 der ersten Liste ausgewählt wird. Bei der ersten Liste wurde ein Listeneintrag 16 automatisch nach Ablauf eines Zeitintervalls ausgewählt, sofern dieser während dieses Zeitintervalls in der markierten Position war. Bei den Listeneinträgen 18 der zweiten Liste ist es erforderlich, dass der Nutzer einen markierten Listeneintrag 18 durch eine Bestätigungseingabe auswählt. Diese Bestätigungseingabe wird bei dem vorliegenden Ausführungsbeispiel durch Drücken des Druckpunkts 15 des Kreuzwippschalters 10 durchgeführt. Erst wenn der Druckpunkt 15 gedrückt worden ist, wird das markierte Ziel für das Navigationssystem ausgewählt und die Anzeige wechselt wieder zurück zu der in Fig. 9 wiedergegebenen Anzeige, wobei jedoch im Anzeigebereich 9 das neue Ziel und die entsprechende Graphik für die Routenführung angezeigt wird.

Erfindungsgemäß gibt es somit zwei Arten von Listen: bei der ersten Liste wird ein markierter Listeneintrag automatisch nach Ablauf eines Zeitintervalls, in welchem der Listeneintrag fortwährend markiert war, ausgewählt; bei der zweiten Liste wird ein markierter Listeneintrag durch eine Bestätigungseingabe ausgewählt.

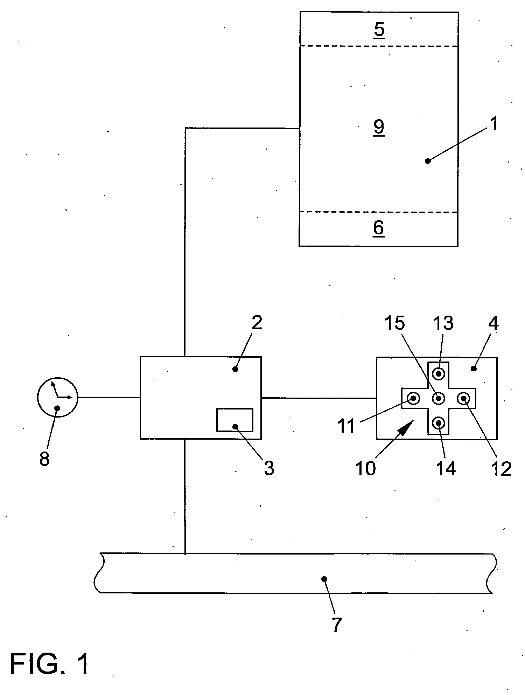

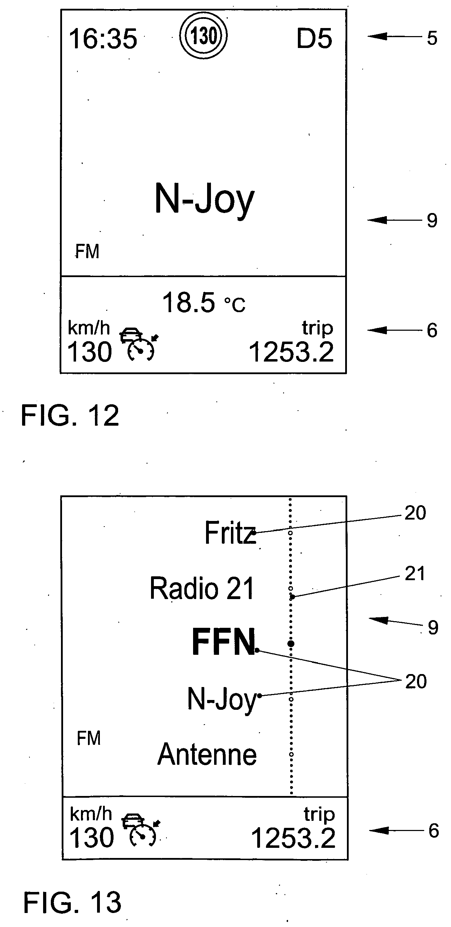

Wie bereits mit Bezug zu den Fig. 1 bis 6 erläutert, gelangt der Nutzer ausgehend von der in Fig. 9 wiedergegebenen Anzeige zu der Darstellung des virtuellen Rings mit den Objekten 17 durch Betätigung des Druckpunktes 11 bzw. 12 des Kreuzwippschalters 11. Durch mehrmalige Betätigung des Druckpunkts 11 bzw. 12 kann der Nutzer als Objekt 17 beispielsweise das Radio des Fahrzeugs auswählen. In diesem Fall gelangt man zu der in Fig. 12 gezeigten Anzeige auf der Anzeigefläche 1. Im Anzeigebereich 9 wird der aktuelle Radiosender angezeigt. Betätigt der Nutzer ausgehend von dieser Anzeige einen der Druckpunkte 13 oder 14, gelangt er zu einer weiteren Liste, die dem Radio des Fahrzeugs zugeordnet ist. Die Darstellung dieser Liste ist in Fig. 13 wiedergegeben. Erneut verschwindet der Anzeigebereich 5. Der Anzeigebereich 6 verkleinert sich und im Anzeigebereich 9 wird eine Teilmenge der Listeneinträge 20 der Liste der Radiosender, die vom Fahrzeug empfangbar sind, angezeigt. Neben den Listeneinträgen 20 für die Radiosender wird schematisch noch eine Skala 21 dargestellt.

Durch Betätigung der Druckpunkte 13 bzw. 14 des Kreuzwippschalters 10 kann der Nutzer einen Bildlauf erzeugen und einen beliebigen Listeneintrag 20 markieren. Die Art der Darstellung der Listeneinträge 20 unterscheidet sich jedoch von der Art der Darstellung der Listeneinträge 18. Ist beispielsweise bei der Anzeige gemäß Fig. 10 der oberste Listeneintrag 18 markiert und betätigt der Nutzer den Druckpunkt 14, um in der Liste nach unten zu gelangen, wird der zweite Listeneintrag 18 von oben markiert, die dargestellte Teilmenge der Liste verändert sich jedoch nicht. Bei der Liste für die Radiosender ist immer der mittlere Listeneintrag 20, d. h. bei dem in Fig. 13 wiedergegebenen Fall der Radiosender FFN, markiert. Betätigt der Nutzer in diesem Fall den Druckpunkt 14 des Kreuzwippschalters 10, wird der nächste Listeneintrag 20, d. h. bei dem in Fig. 13 gezeigten Fall der Radiosender N-Joy, markiert. Dieser Listeneintrag 20 wandert jedoch in die mittlere Stellung, der oberste Listeneintrag 20 verschwindet und unten wird ein neuer Listeneintrag 20 angezeigt. Es verändert sich somit die angezeigte Teilmenge der Liste für die Radiosender.

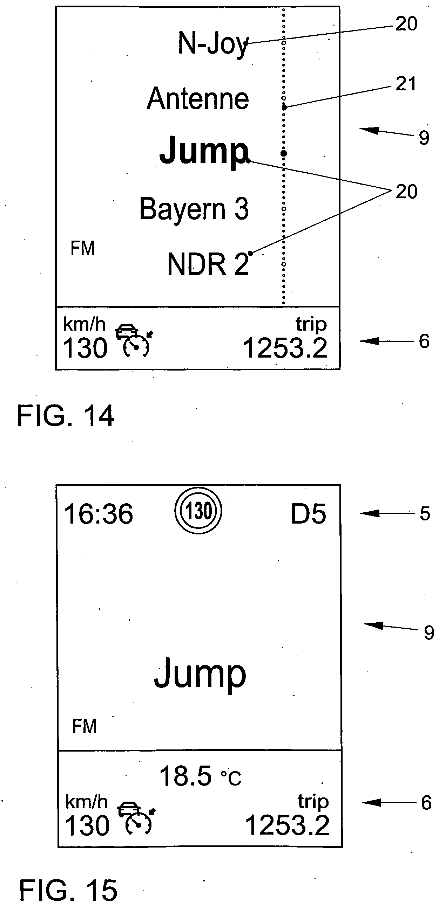

Durch Betätigung des Druckpunkts 14 kann der Nutzer beispielsweise in der Liste der Radiosender einen Bildlauf erzeugen, bis sich der Listeneintrag 20 mit dem Radiosender "Jump" in der mittleren, markierten Position befindet, wie in Fig. 14 dargestellt. Verbleibt dieser Listeneintrag 20 in der mittleren, markierten Position für ein bestimmtes Zeitintervall, wird - wie bei der ersten Liste - nach Ablauf dieses Zeitintervalls dieser Listeneintrag 20 automatisch ausgewählt und die Anzeige wechselt zu der in Fig. 15 wiedergegebenen Anzeige. Das Zeitintervall, das für die automatische Auswahl eines Listeneintrags erforderlich ist, kann insbesondere dasselbe sein, wie bei der ersten Liste für die Multifunktionsanzeige oder etwaiger weiterer Listen, bei denen die Auswahl eines Listeneintrags automatisch, d. h. ohne Betätigungsvorgang des Nutzers, erfolgt.

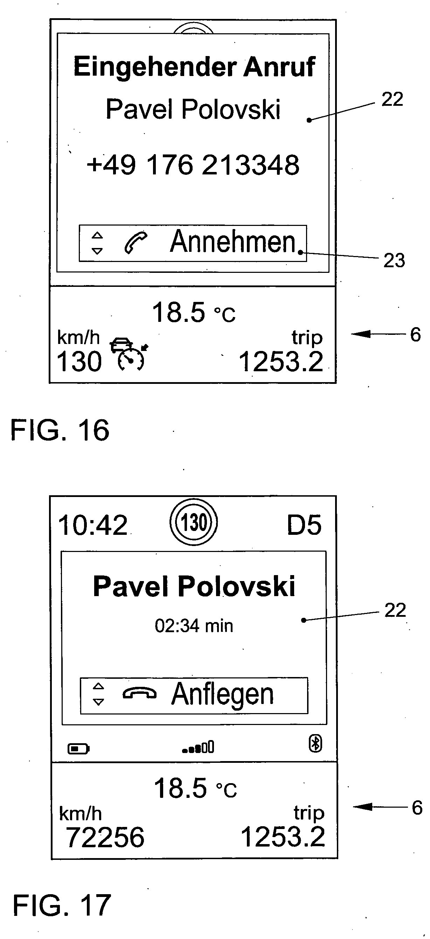

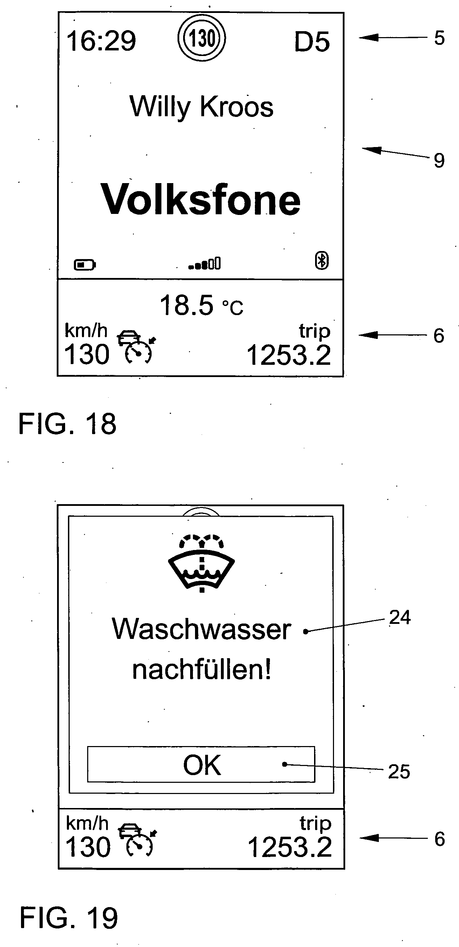

In Fig. 16 ist der Fall gezeigt, bei welcher die Telekommunikationseinrichtung des Fahrzeugs einen eingehenden Anruf erfasst. Unabhängig von der aktuellen Anzeige auf der Anzeigefläche 1, werden zunächst eventuell aktive Bedienelemente, die in Form von Schaltflächen auf der Anzeigefläche 1 angezeigt werden, geschlossen bzw. beendet. Ist beispielsweise aktuell eine Liste aufgerufen, deren Listenelemente angezeigt werden, wird die Listenanzeige zunächst geschlossen und beispielsweise zu dem zuletzt ausgewählten Listeneintrag zurückgekehrt. Danach wird, wie in Fig. 16 gezeigt, ein Fenster 22 geöffnet, welches der aktuellen Anzeige überlagert ist und welches auf den eingehenden Anruf hinweist (Popup-Darstellung). Das Fenster 22 wird so dargestellt, dass der Anzeigebereich 6 weiterhin sichtbar ist, die Anzeigebereiche 5 und 9 gegebenenfalls jedoch nur noch teilweise sichtbar sind oder als Hintergrund sichtbar sind. Der Nutzer kann nun die Schaltfläche 23 "Annehmen" durch eine Bestätigungseingabe, d. h. durch Drücken des Druckpunktes 15 des Kreuzwippschalters 10, betätigen und hierdurch den Anruf annehmen. Die Steuervorrichtung 2 überträgt daraufhin über den Fahrzeugbus 7 ein entsprechendes Signal an die Telekommunikationseinrichtung des Fahrzeugs und verändert die Anzeige auf der Anzeigefläche 1 so, dass die in Fig. 17 wiedergegebene Anzeige dargestellt wird. Ausgehend von dieser Anzeige kann der Nutzer den Anruf durch erneutes Betätigen des Druckpunktes 15 des Kreuzwippschalters 10 beenden, woraufhin die in Fig. 18 wiedergegebene Anzeige auf der Anzeigefläche 1 dargestellt wird. Es wird in diesem Fall ein Listeneintrag der Telefonliste angezeigt.

Auf die gleiche Weise wie auf einen eingehenden Telefonanruf mittels des Popupfensters 22 können dem Nutzer auch verschiedene Warnungen signalisiert werden. Eine solche Warnmeldung ist beispielsweise in Fig. 19 gezeigt. Unabhängig vom aktuellen Kontext wird ein Fenster 24 im Vordergrund dargestellt, welches auf das Nachfüllen des Waschwassers hinweist. Das Fenster 24 wird so angezeigt, dass die Anzeigebereiche 5 und 9 überhaupt nicht mehr sichtbar oder nur noch im Hintergrund sichtbar sind. Vom Anzeigebereich 6 ist nur noch der untere Bereich sichtbar. Gleichzeitig wird in dem Fenster 24 eine Schaltfläche 25 angezeigt. Bei Betätigung des Druckpunktes 15 bestätigt der Nutzer, dass er die Warnung wahrgenommen hat und das Fenster 24 wird wieder geschlossen.

Schließlich wird darauf hingewiesen, dass bei allen Animationen dieses Ausführungsbeispiels zunächst eine beschleunigte Bewegung und zum Ende hin eine abgebremste Bewegung dargestellt wird. Die Animationen können in der Regel durch Nutzeraktionen wie z. B. Eingaben über die Eingabeeinrichtung 4 abgebrochen werden. Es werden während der Animation somit keine Eingaben ignoriert. Einzige Ausnahme in dem vorliegenden Ausführungsbeispiel ist ein Kontextwechsel bei Betätigung des Druckpunktes 11 bzw. 12 des Kreuzwippschalters 10 und ein Bildlauf um eine Listenposition bei der Anzeige der Listeneinträge 20 für die Radiosender.

### Bezugszeichenliste

- 1: Anzeigefläche
- 2: Steuervorrichtung
- 3: Recheneinheit
- 4: Eingabeeinrichtung
- 5: Anzeigebereich
- 6: Anzeigebereich
- 7: Fahrzeugbus
- 8: Systemuhr
- 9: Anzeigebereich
- 10: Kreuzwippschalter
- 11-15: Druckpunkte des Kreuzwippschalters 10
- 16: Listeneintrag
- 17: graphisches Objekt
- 18: Listeneintrag
- 19: Bildlaufbalken
- 20: Listeneintrag
- 21: Skala
- 22: Fenster
- 23: Schaltfläche
- 24: Fenster
- 25: Schaltfläche

## Patentansprüche

1. Verfahren zum Bereitstellen einer Bedienvorrichtung, bei dem
- mittels der Betätigung einer Eingabeeinrichtung (4) eine Informationsanzeige auf einer Anzeigefläche (1) gesteuert wird, wobei die Anzeigefläche (1) einen ersten (5) und einen zweiten Anzeigebereich (6) aufweist, in denen Statusinformationen angezeigt werden, wobei die anzeigbaren Informationen zumindest zwei Listen mit jeweils mehreren Listeneinträgen (16, 18) umfassen,
- durch einen zweiten Betätigungsvorgang, welcher ein einmaliges Betätigen der Eingabeeinrichtung (4) ist, während der Anzeige eines Anzeigeinhalts, der einem ausgewählten Listeneintrag (16) der ersten Liste zugeordnet ist, zu einer Anzeige eines Anzeigeinhalts, der einem Listeneintrag (18) der zweiten Liste zugeordnet ist, gewechselt wird, wobei
- durch den zweiten Betätigungsvorgang während der Anzeige des Anzeigeinhalts, der dem ausgewählten Listeneintrag (16) der ersten Liste zugeordnet ist, zunächst zu einer Darstellung eines ersten graphischen Objekts (17), welches der ersten Liste zugeordnet ist, auf einem virtuellen, perspektivisch dargestellten Ring mit mehreren Objekten (17) gewechselt wird, danach der Ring gedreht wird, bis ein zweites graphisches Objekt (17), das der zweiten Liste zugeordnet ist, im Vordergrund angezeigt wird und schließlich zu der Anzeige des Anzeigeinhalts gewechselt wird, der dem Listeneintrag (18) der zweiten Liste zugeordnet ist,
**dadurch gekennzeichnet, dass**
durch einen ersten Betätigungsvorgang während der Anzeige des Anzeigeinhalts, der dem ausgewählten Listeneintrag (16) der ersten Liste zugeordnet ist, zumindest eine Teilmenge der ersten Liste angezeigt wird, wobei der erste Anzeigebereich (5) verschwindet und der zweite Anzeigebereich (6) kleiner dargestellt wird.

2. Verfahren nach Anspruch 1,
**dadurch gekennzeichnet,**
**dass** durch mehrmaliges Ausführen des ersten Betätigungsvorgangs ein Listeneintrag (16) der ersten Liste markiert und/oder ausgewählt wird.

3. Verfahren nach Anspruch 1,
**dadurch gekennzeichnet,**
**dass** durch den zweiten Betätigungsvorgang festgelegt wird, in welchem Drehsinn der Ring gedreht wird.

4. Verfahren nach Anspruch 1 oder 3,
**dadurch gekennzeichnet,**
**dass** der Ring mehrere Objekte (17) enthält und durch mehrmaliges Ausführen des zweiten Betätigungsvorgangs eines der Objekte (17) des Rings ausgewählt wird.

5. Verfahren nach einem der Ansprüche 1, 3 oder 4,
**dadurch gekennzeichnet,**
**dass** der Ring perspektivisch um eine vertikale Achse gedreht wird.

6. Bedienvorrichtung mit:
- einer Anzeigefläche (1) zur Anzeige von Informationen, wobei die anzeigbaren Informationen zumindest zwei Listen mit mehreren Listeneinträgen (16, 18) umfassen,
- einer Steuervorrichtung (2) zum Erzeugen von Graphikdaten auf der Anzeigefläche (1) und
- einer Eingabeeinrichtung (4) zum Steuern der Informationsanzeige auf der Anzeigefläche (1), wobei die Anzeigefläche (1) einen ersten (5) und einen zweiten Anzeigebereich (6) aufweist, in denen Statusinformationen angezeigt werden, wobei
- auf einen zweiten mittels der Eingabeeinrichtung (4) ausführbaren Betätigungsvorgang, welcher ein einmaliges Betätigen der Eingabeeinrichtung (4) ist, während der Anzeige eines Anzeigeinhalts, der einem ausgewählten Listeneintrag (16) der ersten Liste zugeordnet ist, die Steuervorrichtung (2) eingerichtet ist, die Anzeigefläche (1) so anzusteuern ,dass zu einer Anzeige eines Anzeigeinhalts, der einem Listeneintrag (18) der zweiten Liste zugeordnet ist, gewechselt wird, wobei
- auf den zweiten mittels der Eingabeeinrichtung (4) ausführbaren Betätigungsvorgang während der Anzeige des Anzeigeinhalts, der dem ausgewählten Listeneintrag (16) der ersten Liste zugeordnet ist, zunächst zu einer Darstellung eines ersten graphischen Objekts (17), welches der ersten Liste zugeordnet ist, auf einem virtuellen, perspektivisch dargestellten Ring mit mehreren Objekten (17) wechselbar ist, danach der Ring drehbar ist, bis ein zweites graphisches Objekt (17), das der zweiten Listen zugeordnet ist, im Vordergrund angezeigt wird und schließlich zu der Anzeige des Anzeigeinhalts wechselbar ist, der dem Listeneintrag (18) der zweiten Liste zugeordnet ist,
**dadurch gekennzeichnet,**
**dass** auf einen ersten mittels der Eingabeeinrichtung (4) ausführbaren Betätigungsvorgang während der Anzeige des Anzeigeinhalts, der dem ausgewählten Listeneintrag (16) der ersten Liste zugeordnet ist, die Steuervorrichtung (2) eingerichtet ist, die Anzeigefläche (1) so anzusteuern ,dass zumindest eine Teilmenge der ersten Liste angezeigt wird, wobei der erste Anzeigebereich (5) verschwindet und der zweite Anzeigebereich (6) kleiner dargestellt wird.

7. Bedienvorrichtung nach Anspruch 6,
**dadurch gekennzeichnet,**
**dass** die Eingabeeinrichtung (4) von der Anzeigefläche (1) abgesetzt angeordnet ist.

8. Bedienvorrichtung nach einem der Ansprüche 6 oder 7,
**dadurch gekennzeichnet,**
**dass** die Eingabeeinrichtung (4) für den ersten Betätigungsvorgang einen ersten Wippschalter und/oder für den zweiten Betätigungsvorgang einen zweiten Wippschalter aufweist.

9. Bedienvorrichtung nach einem der Ansprüche 6 bis 8,
**dadurch gekennzeichnet**
**dass** die Eingabevorrichtung (4) für den ersten und den zweiten Betätigungsvorgang einen Kreuzwippschalter (10) aufweist.

10. Bedienvorrichtung nach einem der Ansprüche 6 bis 9,
**dadurch gekennzeichnet**
**dass** die Eingabevorrichtung (4) für den ersten Betätigungsvorgang zumindest einen ersten Tastschalter und/oder für den zweiten Betätigungsvorgang zumindest einen zweiten Tastschalter aufweist.

11. Fahrzeug mit einer Bedienvorrichtung nach einem der Ansprüche 6 bis 10,
**dadurch gekennzeichnet**
**dass** die Eingabeeinrichtung (4) am Lenkrad des Fahrzeugs angeordnet ist oder von einer am Lenkrad befindlichen Hand eines Nutzers aus bedienbar ist.

## Claims

1. Method for providing an operator control apparatus, in which
- the actuation of an input device (4) is used to control a display of information on a display panel (1), wherein the display panel (1) has a first (5) and a second (6) display area in which status information is displayed, the displayable information comprising at least two lists each having multiple list entries (16, 18),
- a second actuation process, which is a single actuation of the input device (4), is used to change, during the display of a display content that is associated with a selected list entry (16) on the first list, to a display of a display content that is associated with a list entry (18) on the second list, wherein
- the second actuation process is used, during the display of the display content that is associated with the selected list entry (16) on the first list, to change initially to a representation of a first graphical object (17), which is associated with the first list, on a virtual, perspectively represented ring having multiple objects (17), the ring then being rotated until a second graphical object (17), which is associated with the second list, is displayed in the foreground, and to change finally to the display of the display content that is associated with the list entry (18) on the second list,
**characterized in that**
a first actuation process is used, during the display of the display content that is associated with the selected list entry (16) on the first list, to display at least one subset of the first list, the first display area (5) disappearing and the second display area (6) being represented in smaller form.

2. Method according to Claim 1,
**characterized**
**in that** repeated performance of the first actuation process is used to mark and/or select a list entry (16) on the first list.

3. Method according to Claim 1,
**characterized**
**in that** the second actuation process is used to stipulate the direction of rotation in which the ring is rotated.

4. Method according to Claim 1 or 3,
**characterized**
**in that** the ring includes multiple objects (17) and repeated performance of the second actuation process is used to select one of the objects (17) of the ring.

5. Method according to one of Claims 1, 3 and 4,
**characterized**
**in that** the ring is rotated in perspective about a vertical axis.

6. Operator control apparatus having:
- a display panel (1) for displaying information, wherein the displayable information comprises at least two lists having multiple list entries (16, 18),
- a control apparatus (2) for producing graphical data on the display panel (1), and
- an input device (4) for controlling the display of information on the display panel (1), wherein the display panel (1) has a first (5) and a second (6) display area in which status information is displayed, wherein
- on a second actuation process, which is performable by means of the input device (4) and is a single actuation of the input device (4), during the display of a display content that is associated with a selected list entry (16) on the first list, the control apparatus (2) is set up to actuate the display panel (1) such that there is a change to a display of a display content that is associated with a list entry (18) on the second list, wherein
- on the second actuation process performable by means of the input device (4), during the display of the display content that is associated with the selected list entry (16) on the first list, it is possible to change initially to a representation of a first graphical object (17), which is associated with the first list, on a virtual, perspectively represented ring having multiple objects (17), the ring then being rotatable until a second graphical object (17), which is associated with the second list, is displayed in the foreground, and to change finally to the display of the display content that is associated with the list entry (18) on the second list,
**characterized**
**in that** on a first actuation process, performable by means of the input device (4), during the display of the display content that is associated with the selected list entry (16) on the first list, the control apparatus (2) is set up to actuate the display panel (1) such that at least one subset of the first list is displayed, the first display area (5) disappearing and the second display area (6) being represented in smaller form.

7. Operator control apparatus according to Claim 6,
**characterized**
**in that** the input device (4) is arranged remotely from the display panel (1).

8. Operator control apparatus according to either of Claims 6 and 7,
**characterized**
**in that** the input device (4) has a first rocker switch for the first actuation process and/or a second rocker switch for the second actuation process.

9. Operator control apparatus according to one of Claims 6 to 8,
**characterized**
**in that** the input apparatus (4) has a cross-type rocker switch (10) for the first and second actuation processes.

10. Operator control apparatus according to one of Claims 6 to 9,
**characterized**
**in that** the input apparatus (4) has at least one first pushbutton switch for the first actuation process and/or at least one second pushbutton switch for the second actuation process.

11. Vehicle having an operator control apparatus according to one of Claims 6 to 10,
**characterized**
**in that** the input device (4) is arranged on a steering wheel of the vehicle or is operable by a hand of a user that is on the steering wheel.

## Revendications

1. Procédé de fourniture d'un dispositif de commande, dans lequel
- un affichage d'informations est commandé au moyen de l'actionnement d'un dispositif d'entrée (4) sur une surface d'affichage (1), dans lequel la surface d'affichage (1) comporte des première (5) et deuxième zones d'affichage (6) dans lesquelles des informations d'état sont affichées, dans lequel les informations pouvant être affichées comprennent au moins deux listes ayant chacune plusieurs entrées de listes (16, 18),
- au moyen d'un deuxième processus d'actionnement, qui est un actionnement unique du dispositif d'entrée (4), pendant l'affichage d'un contenu d'affichage qui est associé à une entrée de liste (16) sélectionnée de la première liste, un basculement est effectué sur un affichage d'un contenu d'affichage qui est associé à une entrée de liste (18) de la deuxième liste, dans lequel
- au moyen du deuxième processus d'actionnement, pendant l'affichage du contenu d'affichage qui est associé à l'entrée de liste (16) sélectionnée de la première liste, un basculement est d'abord effectué sur une représentation d'un premier objet graphique (17), qui est associé à la première liste, sur un anneau virtuel représenté en perspective comportant plusieurs objets (17), puis l'anneau est mis en rotation jusqu'à ce qu'un deuxième objet graphique (17), qui est associé à la deuxième liste, soit affiché au premier plan, et un basculement est enfin effectué sur l'affichage du contenu d'affichage qui est associé à l'entrée de liste (18) de la deuxième liste,
**caractérisé en ce que**,
au moyen d'un premier processus d'actionnement, pendant l'affichage du contenu d'affichage qui est associé à l'entrée de liste (16) sélectionnée de la première liste, au moins un sous-ensemble de la première liste est affiché, dans lequel la première zone d'affichage (5) est escamotée et la deuxième zone d'affichage (6) est représentée de façon réduite.

2. Procédé selon la revendication 1,
**caractérisé en ce qu'**une entrée de liste (16) de la première liste est marquée et/ou sélectionnée par une exécution répétée du premier processus d'actionnement.

3. Procédé selon la revendication 1,
**caractérisé en ce que** le sens de rotation de l'anneau est établi par le deuxième processus d'actionnement.

4. Procédé selon la revendication 1 ou 3,
**caractérisé en ce que** l'anneau contient plusieurs objets (17) et **en ce que** l'un des objets (17) de l'anneau est sélectionné par exécution répétée du deuxième processus d'actionnement.

5. Procédé selon l'une quelconque des revendications 1, 3 ou 4,
**caractérisé en ce que** l'anneau est mis en rotation en perspective autour d'un axe vertical.

6. Dispositif de commande comportant :
- une surface d'affichage (1) destinée à afficher des informations, dans lequel les informations pouvant être affichées comprennent au moins deux listes contenant plusieurs entrées de liste (16, 18),
- un dispositif de commande (2) destiné à générer des données graphiques sur la surface d'affichage (1), et
- un dispositif d'entrée (4) destiné à commander l'affichage d'informations sur la surface d'affichage (1), dans lequel la surface d'affichage (1) comporte des première (5) et deuxième zones d'affichage (6) dans lesquelles sont affichées des informations d'état, dans lequel
- lors d'un deuxième processus d'actionnement pouvant être exécuté au moyen du dispositif d'entrée (4), lequel processus est un actionnement unique du dispositif d'entrée (4), pendant l'affichage d'un contenu d'affichage qui est associé à une entrée de liste sélectionnée (16) de la première liste, le dispositif de commande (2) est conçu pour commander la surface d'affichage (1) de manière à ce qu'un basculement soit effectué sur un affichage d'un contenu d'affichage qui est associé à une entrée de liste (18) de la deuxième liste, dans lequel
- lors du deuxième processus d'actionnement pouvant être exécuté au moyen du dispositif d'entrée (4), pendant l'affichage du contenu d'affichage qui est associé à l'entrée de liste (16) sélectionnée de la première liste, un basculement peut d'abord être effectué sur un affichage d'un premier objet graphique (17) qui est associé à la première liste, sur un anneau virtuel représenté en perspective comportant plusieurs objets (17), puis l'anneau peut être mis en rotation jusqu'à ce qu'un deuxième objet graphique (17), qui est associé à la deuxième liste, soit affiché au premier plan et enfin, un basculement peut être effectué sur l'affichage du contenu d'affichage qui est associé à l'entrée de liste (18) de la deuxième liste, **caractérisé en ce que**,
lors d'un premier processus d'actionnement pouvant être exécuté au moyen du dispositif d'entrée (4), pendant l'affichage du contenu d'affichage qui est associé à l'entrée de liste (16) sélectionnée de la première liste, le dispositif de commande (2) est conçu pour commander la surface d'affichage (1) de manière à ce qu'au moins un sous-ensemble de la première liste soit affiché, dans lequel la première zone d'affichage (5) est escamotée et la deuxième zone d'affichage (6) est représentée de façon réduite.

7. Dispositif de commande selon la revendication 6,
**caractérisé en ce que** le dispositif d'entrée (4) est disposé de manière décalée par rapport à la surface d'affichage (1).

8. Dispositif de commande selon l'un quelconque des revendications 6 ou 7,
**caractérisé en ce que** le dispositif d'entrée (4) comporte un premier interrupteur à bascule pour le premier processus d'actionnement et/ou un deuxième interrupteur à bascule pour le deuxième processus d'actionnement.

9. Dispositif de commande selon l'un quelconque des revendications 6 à 8,
**caractérisé en ce que** le dispositif d'entrée (4) comporte un bouton de navigation (10) pour les premier et deuxième processus d'actionnement.

10. Dispositif de commande selon l'un quelconque des revendications 6 à 9,
**caractérisé en ce que** le dispositif d'entrée (4) comporte au moins un premier bouton-poussoir pour le premier processus d'actionnement et/ou au moins un deuxième bouton-poussoir pour le deuxième processus d'actionnement.

11. Véhicule comportant un dispositif de commande selon l'un quelconque des revendications 6 à 10,
**caractérisé en ce que** le dispositif d'entrée (4) est disposé sur le volant de direction du véhicule ou peut être commandé par une main se trouvant sur le volant de direction d'un utilisateur.
